Europäisches Patentamt

European Patent Office

Office européen des brevets

(11) Publication number:

**0 107 445**
**B1**

(12) EUROPEAN PATENT SPECIFICATION

(45) Date of publication of patent specification: **10.12.86**

(51) Int. Cl.⁴: **F 16 K 31/06**

(21) Application number: **83306174.0**

(22) Date of filing: **12.10.83**

(54) Solenoid valve.

(30) Priority: **14.10.82 US 434305**

(43) Date of publication of application:
**02.05.84 Bulletin 84/18**

(45) Publication of the grant of the patent:
**10.12.86 Bulletin 86/50**

(84) Designated Contracting States:
**DE FR GB IT NL SE**

(56) References cited:
**FR-A-2 273 213**
**US-A-4 361 309**

**PATENTS ABSTRACTS OF JAPAN, vol. 7, no. 24 (M-189)1169r, 29th January 1983**

(73) Proprietor: **HONEYWELL INC.**
**Honeywell Plaza**
**Minneapolis Minnesota 55408 (US)**

(72) Inventor: **Beyer, Kenneth E.**
**20 Chestnut Lane**
**West Hartford, CT 06110 (US)**
Inventor: **Horlacher Wilhelm H.**
**248 Lamp Lighter Lane**
**Newington, CT 06110 (US)**

(74) Representative: **Geissler, Bernhard, Dr. Patent- und Rechtsanwälte**
**Bardehle-Pagenberg-Dost- Altenburg- Frohwitter & Partner Postfach 86 06 20**
**D-8000 München 86 (DE)**

Courier Press, Leamington Spa, England.

## Description

The present invention is directed to solenoid actuators, and in particular to a solenoid valve for providing a first or second flow rate therethrough.

Prior attempts to provide two different flow rates have included the use of two valves in parallel flow lines with a selective actuation of the valves which may have had different size flow control orifices. Another prior solution to the problem used a single orifice valve with a single coil and armature and a half-wave rectified alternating current (AC) input energizing signal. The energizing signal produced an oscillation of the armature at a fixed frequency to produce a reduced flow rate relative to a non-oscillatory fully open position of the armature produced by a non-rectified energizing signal. These prior approaches have inherent disadvantages such as chatter at reduced flow in the case of the oscillating armature and increased cost of the extra valve and plumbing in the case of the dual valve. Accordingly, it is desirable to provide a valve having a selectively changeable flow rate and which exhibits a quiet operation and direct operation on alternating current (AC) and direct current (DC).

A valve having such characteristics is known from FR—A—2 273 213. This known valve has, like most valves, a valve body with a fluid path therethrough, with a valve closure member co-operating with a valve seat to control the flow of fluid through the flow path. The valve closure member is controlled by two stage solenoid drive means. A first armature is connected to the valve closure member, and a second armature is coaxial with and coupled to the first armature. An axial compression spring acting between the valve closure member and a fixed stop in the valve body normally holds the valve closed. The second armature is movable to abut against an end stop in the valve body, such movement being coupled to the first armature and hence, via an axial connecting shaft, to the valve closure member, to move it to a first position away from the valve seal. The first armature can be moved further in the valve body, to abut against a further fixed stop therein, by an additional full rate energizing signal to move the valve closure member to a second position further away from the valve seat than the first position.

This valve suffers however from certain mechanical disadvantages. First, three separate stops are required to control the movement of the armature. Second, the structure involves the provision of a spring and stop adjacent to the valve closure member, involving the danger of mutual contamination between the spring and associated parts and the fluid passing through the valve.

The object of the present invention is to provide a two-rate valve in which these disadvantages are alleviated or overcome.

Accordingly to the present invention provides a solenoid valve comprising a valve body having a fluid path therethrough, a valve closure member co-operating with a valve seat to control flow of fluid through the fluid path, and two stage solenoid drive means comprising a first armature connected to the valve closure member and a second armature coaxial with and coupled to the first armature, the second armature being movable against an end stop in the valve body in response to a low rate energizing signal to move the valve closure member to a first position away from the valve seat and the first armature being movable in the valve body in response to an additional full rate energizing signal to move the valve closure member to a second position further away from the valve seat than the first position, characterized by a first compression spring between the end stop and both armatures, against which the low rate energizing signal works to bring the second armature against the end stop, and a second compression spring, between the two armatures, against which the additional full rate energizing signal works to bring the first armature against the second.

It will be evident that the only stop required for this construction is the end stop. Thus the complicated machined configuration of the known valve, with two separate chambers or compartments for the two armatures with one end of one chamber forming the stop for the first armature, and the other end of that chamber forming the stop for the compression spring, are avoided. Instead, the entire armature assembly can be contained within a simple straight tube, with the end stop fixed at one end. Also, the springs are positioned well away from the valve closure member, rendering it easy to provide a seal between the valve closure member and the bottom of the first armature on the one hand and the bottom end of the tube containing the armature assembly on the other. In fact, the first armature and the valve closure member can be assembled as a single integral unit, with the valve closure member being a cylinder of slightly greater diameter than the armature to form a good seal in the tube containing the armature assembly.

An embodiment of the present invention will now be described, by way of example, with reference to the accompanying drawings, in which:

Figure 1 is a cross-section of a two-stage solenoid valve according to the present invention, and

Figures 2A, 2B, and 2C are simplified cross-sections of the valve of Figure 1, illustrating a sequence operations thereof.

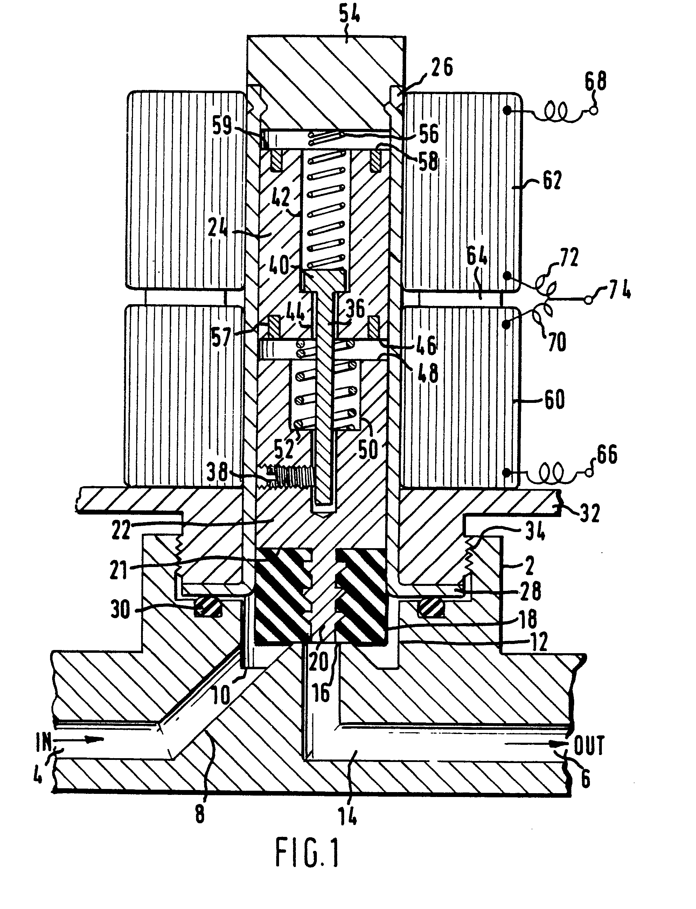

Referring to Figure 1, the two-stage solenoid valve has a valve body 2 with a fluid inlet port 4 and a fluid outlet port 6. The fluid inlet port 4 is connected to a fluid inlet passage 8 in the valve body 2 terminating in a first inner fluid orifice 10 communicating with a recess 12 of the valve body 2. The fluid outlet port 6 is connected to a fluid passage 14 in the valve body 2 which connects the fluid outlet port 6 to a second internal fluid orifice 16.

A fluid sealing ring 18 is coaxially mounted on a

2

coaxial extension 20 projecting from an end face of a valve armature 22 and is arranged to seal the orifice 16 in a closed condition of the valve. The armature 22 is arranged coaxially with a second armature 24 within a cylindrical sleeve 26. An internal end 28 of the sleeve 26 is provided with a radially outwardly extending peripheral flange which is sealed to the valve body 2 by a suitable fluid sealing means, e.g., an 'O' ring 30. The flange 28 is retained against the 'O' ring 30 by a valve cover 32, shown partially in Figure 1, having a threaded connection 34 with the valve body 2.

A connecting rod 36 is coaxially anchored in the armature 22 by a suitable means, e.g., a set screw 38, extending from the side of the armature 22 and bearing against an end of the connecting rod 36. The free end of the connecting rod 36 is provided with an enlarged head 40 located in a coaxial recess 42 in the armature 24. The body of the connecting rod 36 extends through a hole 44 connecting the recess 42 with an end face 46 of the armature 24. An end face 48 of the armature 22 is arranged to face the end face 46 of the armature 24 and has a coaxial recess 50 therein surrounding the connecting rod 36. A compression spring 52 is located within the recess 50 and extends between the bottom of the recess 50 and the end face 46 of the armature 24. A magnetic material end plug 54 is retained in the sleeve 26 to seal the second end of the cylindrical sleeve 26 and to provide a magnetic flux path. A second compression spring 56 extends between the plug 54 and the head 40 of the connecting rod 36 to urge the sealing ring 18 against the orifice 16. A copper shading ring 57 is provided in the end face 46 of the armature 24 and a second copper shading ring 58 is provided in the end face 59 of the armature 24.

A solenoid coil assembly 60 in the form of an annulus surrounding a portion of the sleeve 26 is positioned next to the cover 32. A second solenoid coil assembly 62 in the form of an annulus is spaced from the coil assembly 60 by a nonmagnetic spacer 64 and is also arranged to surround a portion of the cylindrical sleeve 26. The solenoid coil assemblies 60, 62 are shown in a simplified form in Figure 1 and may each include an electromagnetic winding and a magnetic field structure. The solenoid coil 60 is provided with electrical connection 66 to one end thereof while the solenoid coil 62 is provided with an electrical connection 68 to one end thereof. A second electrical connection 70 for the other end of the coil 60 is connected to a second electrical connection 72 for the other end of the coil assembly 62 and to a common electrical connection 74 forming a center tap between the coil assemblies 60, 62.

The valve illustrated in Figure 1 is shown in a closed state wherein a sealing ring 18 is positioned against the orifice 16 by the spring 56 acting through the connecting rod 36 and the attached armature 22 is seal the fluid path through the valve body between the inlet port 4 and the outlet port 6. In this position the armature 22 is located at the bottom of the sleeve 26 while the armature 24 is spaced from the armature 22 to provide a gap between the end faces 46, 48 by the intermediate spring 52 which positions the armature 24 until the head 40 of the connecting rod 36 contacts the bottom of the recess 42 in the second armature 24. Concurrently, the spring 56 is effective to keep the end face 59 of the armature 24 spaced from the plug 54.

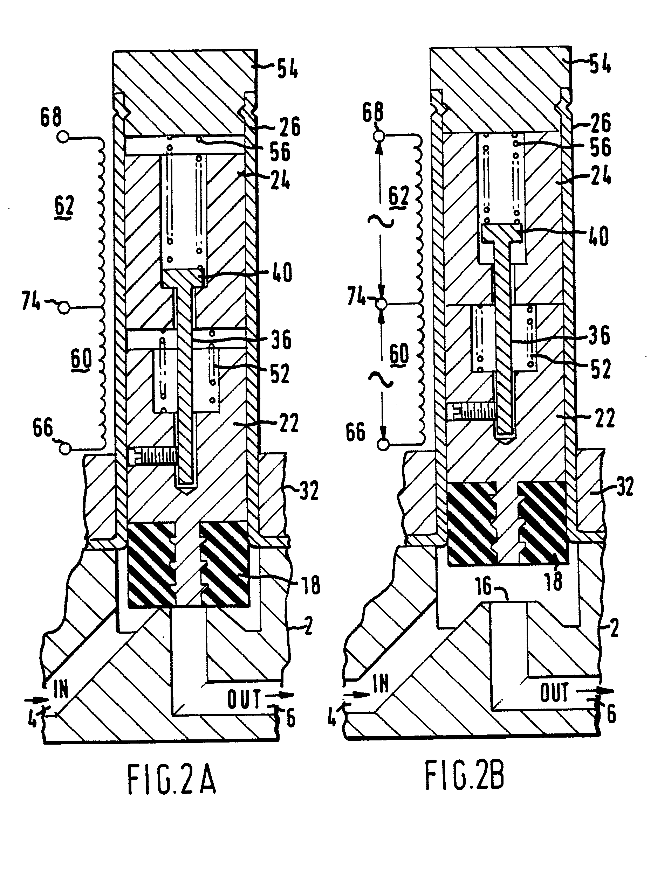

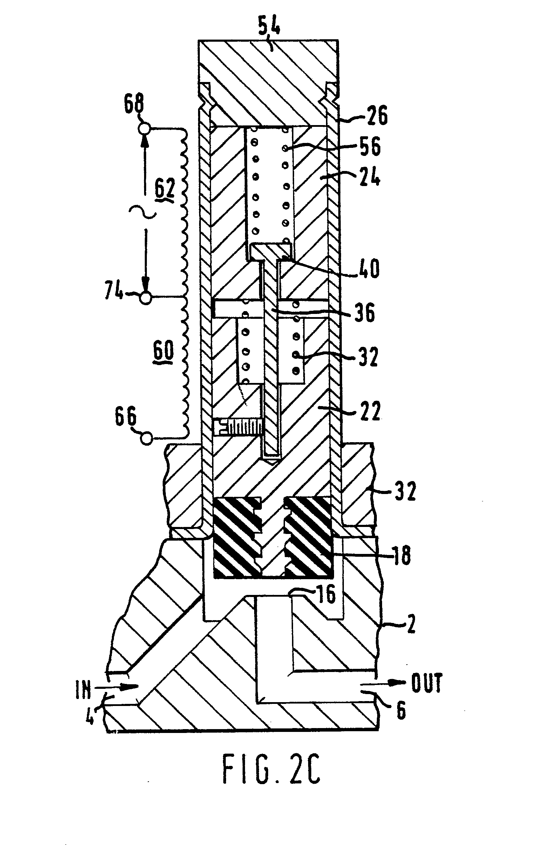

In Figures 2A, 2B, and 2C there are shown simplified cross-sectional representations of the valve shown in Figure 1 to illustrate progressive stages in the operation of the valve to provide a first and a second flow rate. Figure 2A shows the valve in the same closed condition illustrated in Figure 1. Figure 2B shows a fully opened or first state of the valve to provide a maximum or first flow rate through the valve body between the inlet port 4 and the outlet port 6. This fully open state is achieved by energizing the first and second solenoid coils 60, 62, from respective AC or DC sources, not shown, to effect a repositioning of the armature 22, 24 from the position shown in Figure 2A. Specifically, the armature 24 is elevated to a position wherein the second end face 59 bears against the plug 54 while compressing the spring 56. Concurrently, the armature 22 is elevated to a position bringing the surface 48 thereof against the surface 46 of the armature 24 while compressing the spring 52 and further compressing the spring 56. In this position of the armatures 22, 24, the head 40 of the connecting rod 36 is lifted from the bottom of the recess 42 in the armature 24. This position of the armatures 22, 24 is effective to separate the sealing ring 18 from the orifice 16 by a maximum distance to achieve a maximum flow rate through the valve.

To effect a lower or second flow rate through the valve as shown in Figure 2C in a second state of the valve, only the solenoid coil 62 is energized to raise or position the armature 24 against the plug 54 while compressing the spring 56. Inasmuch as the solenoid coil 60 is not energized during this operation, the position of the armature 22 is dependent on the action of the connecting rod 36 wherein the head 40 of the connecting rod 36 is retained against the bottom of the recess in the armature 24 while the spring 52 maintains the spacing between the armatures 22, 24 by allowing the spring 52 to remain in an expanded state. This position of the armature 22 separates the sealing ring 18 from the orifice 16 by a smaller distance than that available for a maximum flow rate as shown in Figure 2B. Thus, the flow rate in the second state operation of the valve as illustrated in Figure 2C is less than the flow rate achieved in the first state operation of the valve as shown in Figure 2B.

**Claims**

1. A solenoid valve comprising a valve body (2) having a fluid path (4, 8, 10, 12, 14, 6) therethrough, a valve closure member (18) co-operating with a valve seat (16) to control flow of fluid through the fluid path, and two stage solenoid drive means comprising a first armature (22) connected to the valve closure member (18) and a second armature (24) coaxial with and coupled to the first armature, the second armature being movable against an end stop (54) in the valve body in response to a low rate energizing signal to move the valve closure member to a first position away from the valve seat and the first armature being movable in the valve body in response to an additional full rate energizing signal to move the valve closure member to a second position further away from the valve seat than the first position, characterized by a first compression spring (56) between the end stop and both armatures, against which the low rate energizing signal works to bring the second armature (24) against the end stop, and a second compression spring (52), between the two armatures, against which the additional full rate energizing signal works to bring the first armature (22) against the second (24).

2. A valve according to claim 1 characterized in that the second armature (24) is coupled to the first (22) by a connecting rod (36) fixed to the first armature and having an enlarged head (40) movable in a recess (42) in the second armature and against which the first spring (56) bears.

3. A valve according to either previous claim characterized in that the first armature (22) and the valve closure member (18) are assembled as a single integral unit, with the valve closure member being of slightly greater diameter than the first armature and forming a seal with the tubular passage (26) in the valve body within which the armatures move.

**Patentansprüche**

1. Magnetventil, das einen Ventilkörper (2), der einen Fluidpfad (4, 8, 10, 12, 14, 6) dadurch hat, ein Ventilschließglied (18), das mit einem Ventilsitz (16) zusammenwirkt, um einen Fluidfluß durch den Fluidpfad zu steuern, und zwei Stufenmagnetantriebseinrichtungen aufweist, die einen ersten Anker (22), der mit dem Ventilschließglied (18) verbunden ist, und einen zweiten Anker (24), der koaxial mit und verbunden mit dem ersten Anker ist, aufweisen, wobei der zweite Anker bewegbar ist gegen einen Endanschlag (54) in dem Ventilkörper in Antwort auf eine Erregungssignal mit kleinem Anteil, um das Ventilschließglied in eine erste Position weg von dem Ventilsitzt zu bewegen, und der erste Anker bewegbar ist in dem Ventilkörper in Antwort auf ein zusätzliches Erregungssignal mit vollem Anteil, um das Ventilschließglied in eine zweite Position weiter weg von dem Ventilsitz als die erste Position zu bewegen, gekennzeichnet durch eine erste Druckfeder (56) zwischen dem Endanschlag und beiden Ankern gegen die das Erregungssignal mit niedrigem Anteil arbeitet, um den zweiten Anker (24) gegen den Endanschlag zu bringen, und eine zweite Druckfeder (52) zwischen den beiden Ankern, gegen die das Erregungssignal mit vollem Anteil arbeitet, um den ersten Anker (22) gegen den zweiten (24) zu bringen.

2. Ventil nach Anspruch 1, dadurch gekennzeichnet, daß der zweite Anker (24) mit dem ersten (22) durch eine Verbindungsstange (36) gekoppelt ist, die an dem ersten Anker fixiert ist und einen vergrößerten Kopf (40) hat, der in einer Aussparung (42) in dem zweiten Anker bewegbar ist und gegen den die erste Feder (56) sich stützt.

3. Ventil nach einem der vorangehenden Ansprüche, dadurch gekennzeichnet, daß der erste Anker (22) und das Ventilschließglied (18) als eine einzelne einteilige Einheit zusammengesetzt sind, wobei das Ventilschließglied von geringfügig größerem Durchmesser ist als der erste Anker und eine Dichtung mit dem röhrenförmigen Durchgang (26) in dem Ventilkörper bildet, innerhalb dessen sich die Anker bewegen.

**Revendications**

1. Un clapet électromagnétique comprenant un corps de soupape (2) ayant un passage pour le fluide (4, 8, 10, 12, 14, 6) ménagé à travers ledit corps, un élément de fermeture de soupape (18) coopérant avec un siège (16) pour commander l'écoulement du fluide par le passage, et deux moyens d'entraînement étagés solénoïde comprenant une première armature (22) reliée à l'élément l'élément de fermeture (8) et une seconde armature (24) coaxiale et accouplée à la première armature, la seconde armature pouvant se déplacer contre une butée d'extrémité (54) menagée dans le corps de soupape en réponse à un signal d'excitation à bas régime pour déplacer l'élément de fermeture de soupape vers une première position éloignée du siège et la première armature pouvant se déplacer dans le corps de soupape en réponse à un signal d'excitation additionnel à plein régime pour déplacer l'élément de fermeture de soupape vers une seconde position plus éloignée du siège de soupape que la première position, caractérisé par un premier ressort de compression (56) monté entre la butée d'extrémité et les deux armatures, contre lequel s'exerce le signal d'excitation à bas régime pour amener la seconde armature (24) contre la butée d'extrémité, et un second ressort de compression (52), monté entre les deux armatures, contre lequel s'exerce le signal d'excitation additionnel à plein régime pour amener la première armature (22) contre la seconde armature (24).

2. Un clapet électromagnétique selon la revendication 1, caractérisé en ce que la seconde armature (24) est accouplée à la première (22) par l'intermédiaire d'une tige de connection (36) fixée à la première armature et présentant une tête élargie (40) pouvant se déplacer dans un logement (42) ménagé dans la seconde armature et contre laquelle vient buter le premier ressort (56).

3. Un clapet selon l'une quelconque des revendications précédentes, caractérisé en ce que la première armature (22) et l'élément de fermeture de soupape (18) sont assemblés comme une unité venue d'une seule pièce, l'élément de fermeture de soupape présentant un diamètre légèrement plus grand que la première armature et formant un joint étanche avec le passage tubulaire (26) ménagé dans le corps de soupape dans lequel se déplacent les armatures.

FIG.1

1

FIG.2A

FIG.2B

FIG. 2C